# EUROPEAN PATENT APPLICATION

(11) **EP 4 725 298 A1**
(43) Date of publication of application: **15.04.2026**
(21) Application number: 25383084.8
(22) Date of filing: 10.10.2025
(51) Int. Cl.: A01G 23/14

(54) **AN INSTRUMENT THAT CAN BE EMBEDDED IN A TREE TRUNK FOR EXTRACTING, PROTECTING AND PRESERVING SUBSTANCES SUCH AS PINE RESIN**

(30) Priority: 14.10.2024 EP 24383124
(71) Applicant: Sociedad de Resinas Naturales, S.L., 40200 Cuellar (ES)
(72) Inventor: CALLEJO RUJAS, Alberto, 40297 SANCHONUÑO (ES)
(74) Representative: Sugrañes, S.L.P.

(57) **Abstract**

The present invention relates to an instrument (100) which comprises an embedding and guiding portion (1), a covering portion (2) forming a surface, and an intermediate joining portion (3) between the other two portions with which it is made in a single piece. The intermediate joining portion has a greater flexibility than the rest of the piece and can be easily folded by manually applying some force against the covering portion in the direction of the embedding and guiding portion when the latter is embedded. The instrument can move from a non-operative position to an operative covering position in which the covering portion is above the embedding and guiding portion, covering as a kind of visor an outlet edge (12) and part of the space adjacent thereto extending in an opposite direction to the embedding, completely covering and protecting the entire mouth of a collection container.

## Description

### Technical field of the invention

The invention pertains to the field of the recovery and preservation of fatty substances from a tree such as pine resin, and more particularly to an instrument that can be embedded in a tree trunk for extracting and protecting said substances.

### Background of the invention

It is known that resin is the product secreted by the resin-producing cells of resin-producing species, such as conifers, among which pines stand out due to their greater resin production. Resin, also known as natural turpentine, finds applications in everyday products such as adhesives, paints, varnishes, solvents, perfumery and cosmetic products, etc.

The extraction and collection of resin is a known and regulated practice. The first step in collecting the resin is to stimulate the production thereof by making a series of notches (called tappings), preferably circular and crosswise in the bark of the tree down to the sapwood.

To guide the resin toward the collection container, there is the option of placing a zinc or galvanised iron sheet, known as a "plate" or "clamp". The collection container, which can be a simple pot or bucket, is attached to the trunk below the plate/clamp. The plate/clamp is attached to the trunk by making an incision with a tool called a crescent having a rounded profile, which is equally deep into the trunk, otherwise, if it had a straight profile, the incision would be deeper in the centre than at the ends when it is driven into the convex surface of the trunk. The plate/clamp sheet is usually open V-shaped or partially elliptical, and is inserted into the incision made with the crescent so that it protrudes from the trunk by about 2 cm on each side.

When the tapping is made, the resinous juice begins to flow outwards in the form of resin droplets that slide downwards due to the effect of gravity. When the resin comes out of the notches in the tapping, the resin is liquid and transparent, but as it comes into contact with the outside, it turns into a whitish, viscous and opaque substance. This substance is made up of turpentine essence (volatile part) and a fixed residue called rosin.

Due to contact with the outside, the already oxidised resin (known as *"miera"* in Spanish) is mixed with environmental impurities, solid or liquid, such as portions of leaves or pine needles, dust, rainwater, insects, shavings, etc.

In fact, the resin canals cut in a tapping become clogged by contact with the air and stop producing resin, so the tapping must be renewed and raised upwards a little. Prior to performing the tapping, it is important to cover the collection container to prevent even more of the above-mentioned impurities from falling therein.

After several tappings, the collection container is full and it is necessary to unhook the same from the trunk and pour its contents into a can and then into drums that are scattered on the ground. Finally, the drums are transferred to resin facilities for processing, i.e. distillation and production of resin-derived products in a first transformation, such as rosin and turpentine.

From an economic point of view, it is worth mentioning that the profit obtained by the resin collectors depends on the resin collected that is free of impurities and water, so it is necessary to take measures to reduce the amount of impurities that can be mixed with the resin collected.

Various solutions are known in the state of the art, consisting of collection containers provided with lids that can be coupled to the containers or with lids attached above the mouths of the containers.

For example, Chinese utility model document CN202068799U relates to a rainproof container cover for extracting resin from trees, comprising a collection container cover and an attachment mechanism connected to resin-producing trees, wherein the collection container cover comprises a cover body and a hanging nail arranged on the cover body. A hanging hole and an attachment hole are provided in the attachment mechanism. The cover body is connected with the hanging hole for hanging the attachment mechanism through the hanging nail so that the container cover is attached on the attachment mechanism, and the attachment mechanism is attached on the resin producing trees through the attachment hole. The rainproof container cover for extracting resin has the advantages that the rainproof container cover can cover the body of a collection container, preventing wind, rain and foreign matter from entering the collection container, and the container cover can be conveniently opened to catch the container and pour the resin. However, the attachment of this container cover to the tree trunk involves an additional operation to be carried out by the resin collector, and the use of an additional part, independent of the collection container.

Chinese utility model document CN202077450U discloses a rain cover device consisting of a container cover body and a support structure. A mechanism arranged between the container cover body and the support structure allows the container cover body to rotate with respect to the support structure. The rain cover device covers a resin collection container at a short distance from the container effectively preventing rain, mosquitoes and insects as well as broken branches and leaves from entering the container, ensuring the quality of resin extraction. Parallel left- and right-hand push-pull rotating structures are arranged on the same deck to accommodate people's dexterity. Although it is said to be easy to install, it is an additional task to be carried out by the resin collector, which entails higher labour costs.

Other solutions like the one disclosed in Chinese utility model document CN202095363U involve providing the collection container with a lid hinged to the mouth of the collection container. This solution, while guaranteeing a collection with a minimum of impurities, implies the use of a more complex container, more complicated to store when not in use and a specific manner of attaching the container to the trunk. In addition, the attachment point must be properly calculated so that the cover does not interfere with the protruding part of the clamp.

It is an objective of the present invention to protect the collected resin from impurities and to ensure that this does not represent a workload for the resin collector, as it is essential to preserve and optimise the working time per pine tree in the resin harvesting process. It is also necessary not to have to stock complex accessory parts that take up extra storage space when not in use.

### Description of the invention

The instrument that can be embedded in a tree trunk for extracting substances such as pine resin, comprises an embedding and guiding portion consisting of a V-shaped sheet or strip or a circular arc-shaped sheet or strip, which, when folded, can be embedded at one end edge into the tree trunk to reach the fatty substance and guide it out of the trunk to an outlet edge of the portion from which the fatty substance can be poured into a container located below the outlet edge. This embedding and guiding portion is identical or very similar to the parts called "plates" or "clamps", which are the ones that guide the resin to a collection container.

The instrument which is the subject of the invention is characterised in that it also comprises a covering portion, as a kind of visor, which is essentially flat and forms a covering surface over the collection container, and an intermediate joining portion which joins the outlet edge of the embedding and guiding portion with the covering portion. The embedding and guiding portion, the intermediate joining portion and the covering portion are made in a single piece.

It is also characteristic of the instrument that the intermediate joining portion has a greater flexibility than the covering portion, so that the intermediate joining portion has the ability to be flexible and adjustable and can be easily folded by manually applying some force against the covering portion in the direction of the embedding and guiding portion when the latter is embedded and placed in its fixed position in the trunk. Due to this greater flexibility of the intermediate joining portion, it allows an optimum adjustment on the resin collection container so that the separation distance between the visor or covering portion and the sheet metal or the embedding and guiding portion can be varied, as well as its inclination and final position adjusted with respect to the collection container depending on the application and magnitude of said force. Thereby, the instrument can move from a non-operative position, in which the projections on a horizontal plane of the outlet edge of the embedding and guiding portion and the covering portion are separated by a distance, to an operative covering position, in which the projections on a horizontal plane of the outlet edge of the embedding and guiding portion and the covering portion are in contact or overlapped, the covering portion in the operative covering position being located above the outlet edge of the embedding and guiding portion and covering, as a kind of visor, the outlet edge and part of the space adjacent thereto extending in the direction opposite to the end edge. Thus, in the operative covering position of the instrument, the covering portion prevents the ingress of dirt, water or other external elements that may corrupt the collected resin.

The manner of working with the instrument of the invention is very simple for the resin collector. It starts from the initial situation in which the tapping process of the bark has been performed in a section of the tree trunk (one of its sides), and a collection container to collect the resin has been attached below, at a certain distance. Next, the location of the plate or clamp has been marked with an instrument called a "crescent", that is to say, the position of the embedding and guiding portion that must be embedded in the trunk according to the mark made.

Then, the resin collector or the person in charge of collecting the resin will take the instrument and bend at a 90-degree angle the embedding and guiding portion (already V-shaped or circular arc-shaped), folding it slightly in half, bringing the arms that form the V or the circular arc from its midpoint closer together so that a sort of guide channel is formed. It shall also fold the visor portion or covering portion over the intermediate joining portion, so as to allow the resin a direct access to the outlet edge of the embedding and resin guiding portion. The outlet edge is the one that the resin collector must visualise in the foreground to ensure that the embedding and guiding portion is well positioned on the mark made. Once it has been manually placed in position, the embedding and guiding portion is embedded by applying light blows to its outer area (outlet edge) to ensure its correct firmness and fastening to the trunk. In this way, the single piece of which the instrument object of the invention is made is positioned and in working position just below the trunk section where the tapping has been made and above the collection container, with the embedding and guiding portion being embedded in the trunk and the channel being created by the bend, slightly inclined with the outlet edge lower than the end edge, conducting the resin from the end edge to the outlet edge, and from there, falling due to the effect of gravity inside the container.

Once this has been done, the resin collector must place the visor or covering portion correctly on top of the collection container by way of a protection or lid. Then he takes the covering portion by hand from its upper end (closest to the trunk), lowering the same into the collection container as if placing a lid thereon. With both hands, holding the covering portion on both sides, he pushes it towards the trunk (the same direction as towards the embedding and guiding portion) while giving it a slight inclination or fall from the inner part near the trunk, which is higher, towards its outermost part and near the collection container, which is lower, in order to force the intermediate joining portion to bend so that the covering portion can be placed above the mouth of the container or bucket, as if it were a protective visor.

Finally, once the covering portion is correctly positioned, the resin collector bends downwards at 90-degree angles by applying a slight force with his hands, the two lateral sides of the visor that protrude from the perimeter of the mouth or upper part of the collection container, allowing for a greater protection and adjustment to the same.

Advantageously, the embedding portion, the covering portion and the intermediate portion are made in a single piece. It is precisely the fact that it is a single piece, which allows the resin collector to place an element for protecting and preserving the resin without the need to place or assemble any additional parts or use complicated instruments. With only the skill and dexterity of his hands and the same tools that are currently available, the resin collector can easily place the instrument in the pine trunk and bring it into an operative position in a minimal time. In this way, the harvesting technique is exactly the same and the preparing work of the pine is practically the same, but with the advantage of introducing an element for protection and preservation that is key to the quality and purity of the resin.

There are precisely two elements that stand out as the main key advantages of the present invention. On the one hand, the preservation of a higher purity resin in the collection container, free of residues and water; and on the other hand, the optimisation of the resin collector's working time in the pine forest, i.e. allowing a considerable saving of time and "visits" to the pine tree, as he does not have to empty the containers or "pots" of rainwater when he is in the process of making the notches or tappings, and therefore it is not necessary to ensure that the pot is free of water, as the visor covers and protects the same and leaves its volume only for filling with resin.

According to another feature of the invention, the embedding portion, the covering portion and the intermediate portion are made in a single piece made of metal sheet or foil. The sheet or foil is preferably made of galvanised iron, although other materials such as steel or other metal alloys are not ruled out. The metal sheet or foil has a thickness between 0.2 and 0.4 cm, preferably 0.3 cm.

According to a preferred embodiment of the invention, the intermediate portion comprises at least two joining strips spaced apart, each of a width less than the width of the V-shaped or circular arc-shaped sheet or strip, of the embedding and guiding portion. Each of the at least two joining strips extends from a corresponding arm of the V-shaped or circular arc-shaped sheet or strip, on one side of the vertex of the V or of the midpoint of the circular arc, to the covering portion. In this way, folding the strips into an operative protective position is easy and does not require much effort on the part of the resin collector.

In one embodiment of interest, each joining strip has a width comprised between 1 cm and 2 cm, preferably being 1.5 cm in the case of the V-shaped sheet or strip, and preferably being 1.7 cm in the case of the circular arc-shaped sheet or strip, and the width of the V-shaped or circular arc-shaped sheet or strip of the embedding and guiding portion is comprised between 3.5 cm and 5 cm, preferably being 4.25 cm in the V-shaped strip and 4.00 cm in the circular arc-shaped strip. With regard to the separation distance between the joining areas of each of the two joining strips to the covering portion, this distance is comprised between 8 and 11 cm in the case of the V-shaped sheet or strip, and between 10 and 13 cm in the case of the circular arc-shaped sheet or strip. The length of each joining strip is comprised between 8.5 and 13.5 cm. In the non-operative position, the maximum separation distance between the projection on a horizontal plane of the vertex of the V of the outlet edge of the embedding and guiding portion and the projection on a horizontal plane of the covering portion is comprised between 6 and 10 cm, preferably being about 8 cm. In the case of the circular arc-shaped sheet or strip in the non-operative position, the maximum separation distance between the projection on a horizontal plane of the midpoint or the circular arc of the outlet edge of the embedding and guiding portion and the projection on a horizontal plane of the covering portion is comprised between 11 and 13 cm, preferably being about 12 cm.

With regard to the absolute dimensions referred to here, it is understood that there may be a tolerance, which in this case is ± 5 % of the values given.

According to another feature of the invention, the covering portion defines a covering surface having a round, elliptical or polygonal shape, rectangular and round shapes being preferable. The covering portion has an area comprised between 200 and 800 cm², sufficient to completely cover the area defined by the mouth of the collection container, which in many cases is a bucket, called a "pot", with a circular mouth.

According to another aspect of the invention, an assembly for extracting and collecting fatty substances from the trunk of a tree such as pine resin is disclosed. The assembly which is the subject of the invention is characterised in that it comprises an instrument such as that described above, and a collection container provided with an open mouth, suitable for collecting and containing a certain volume of the fatty substance which is guided by the embedding and guiding portion of the instrument, from its end edge to over its outlet edge, wherein the surface area of the covering portion is equal to or greater than the surface area defining the contour of the open mouth of the collection container to protect the integrity of the collected fatty substance when the instrument is in the operative protective position.

### Brief description of the drawings

To complement the description that is being made and in order to facilitate the understanding of the characteristics of two embodiments of the instrument that is the subject of the invention, the present description is accompanied by a set of drawings in which, for illustrative and not limited purposes, the following has been represented:
Figure 1 is a plan view of a first embodiment of the instrument as per the invention, made of sheet metal, in a non-operative position;
Figure 2 is a schematic view of a tree trunk in which an instrument known as a clamp is used for resin extraction, which belongs to the prior art;
Figure 3 is a schematic view of a tree trunk in which the instrument of the invention is used for protecting and preserving the resin collected in the collection container; and
Figures 4 to 6 are different perspective views of the instrument of the invention according to the first embodiment in an operative protective position during a use thereof for extracting resin from a tree trunk and its preservation; and
Figure 7 is a plan view of a second embodiment of the instrument as per the invention, made of sheet metal, in a non-operative position.

### Detailed description of an embodiment

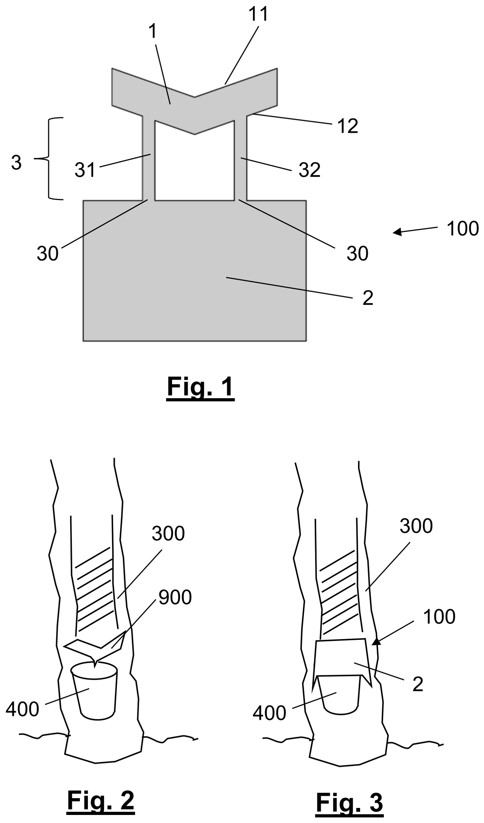

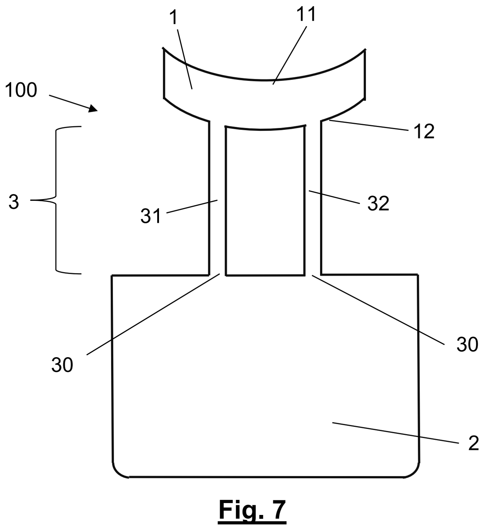

An instrument 100 that can be embedded in a trunk 300 of a tree for extracting and preserving fatty substances thereof such as pine resin in accordance with the present invention is exemplified in the drawings. The instrument 100 is uniquely comprised by an embedding and guiding portion 1, a covering portion 2, and an intermediate joining portion 3. Figure 1 and Figure 7 show how these three portions are made in a single piece, made of metal sheet or foil. As a guideline, the thickness of the metal sheet or foil is between 0,2 and 0,4 cm, with 0,3 cm being the most preferred value. For reasons of functionality and cost, the metal sheet or foil part is made of galvanised iron.

The embedding and guiding portion 1 in Figure 1 is configured by a V-shaped sheet or strip, in which two parallel long sides can be distinguished, formed by an end edge 11 and an outlet edge 12, each formed by two straight sections joined at an obtuse angle (about 141° in Figure 1), and two parallel short sides joining the long sides. In the example shown, the long sides are about 10.4 cm long, the short sides are about 4.5 cm long and the strip forming the portion is about 4.25 cm wide (separation distance between the long sides).

On the other hand, the embedding and guiding portion 1 of Figure 7 is configured by a sheet or strip in the form of a circular arc or crescent arc, in which two parallel long sides can be distinguished, formed by an end edge 11 and an outlet 12, each formed by parallel circular arc sections, and two parallel short sides joining the long sides. In the example depicted, the long sides are circular arcs with a radius of 14.7 cm and with a chord of 17.1 cm, and the short sides are about 4 cm long.

In both Figure 1 and Figure 7, the embedding and guiding portion 1 is capable of being manually folded in half, around the imaginary line joining the two vertexes or the two midpoints of the circular arcs of the end edge 11 and the outlet edge 12, and of being inserted into the trunk 300 of a tree until the end edge 11 reaches the fatty substance. This operation is very similar to the embedding of a part known as a plate or clamp 900, belonging to the state of the art, shown in Figure 2, which is positioned inclined downwards, away from the trunk, so that the fatty substance or resin slides down its surface and falls due to the effect of gravity inside the collection container 400.

In contrast to the plate or clamp 900 shown in the resin collection of Figure 2, the instrument 100 further comprises the covering portion 2, essentially flat and forming a covering surface, rectangular in the drawings and with two sides folded downwards, and the intermediate joining portion 3.

As Figures 1 and 7 show, the intermediate portion 3 comprises at least two joining strips 31, 32 spaced apart, each having a width of less than the width of the V-shaped or circular arc-shaped sheet or strip of the embedding and guiding portion 1, wherein each of the at least two joining strips 31, 32 extends from a corresponding arm of the V-shaped or circular arc-shaped sheet or strip, on one side of the vertex of the V or of the midpoint of the arc, to the covering portion 2.

In the exemplary embodiment shown in Figure 1, each joining strip 31, 32 has a width comprised between 1 and 2 cm, particularly 1.5 cm, and the width of the V-shaped sheet or strip of the embedding and guiding portion 1 is comprised between 3.5 and 5 cm. The separation distance between the joining areas 30 of each of the two joining strips 31, 32 to the covering portion 2 is comprised between 8 and 11 cm, and the length of each joining strip 31, 32 is comprised between 8.5 and 11.5 cm.

In the exemplary embodiment shown in Figure 7, each joining strip 31, 32 has a width of about 1.7 cm, and the width of the circular arc-shaped sheet or strip of the embedding and guiding portion 1 is about 4 cm. The separation distance between the joining areas 30 of each of the two joining strips 31, 32 to the covering portion 2 is comprised between 8 and 11 cm, and the length of each joining strip 31, 32 is comprised between 10 and 13 cm.

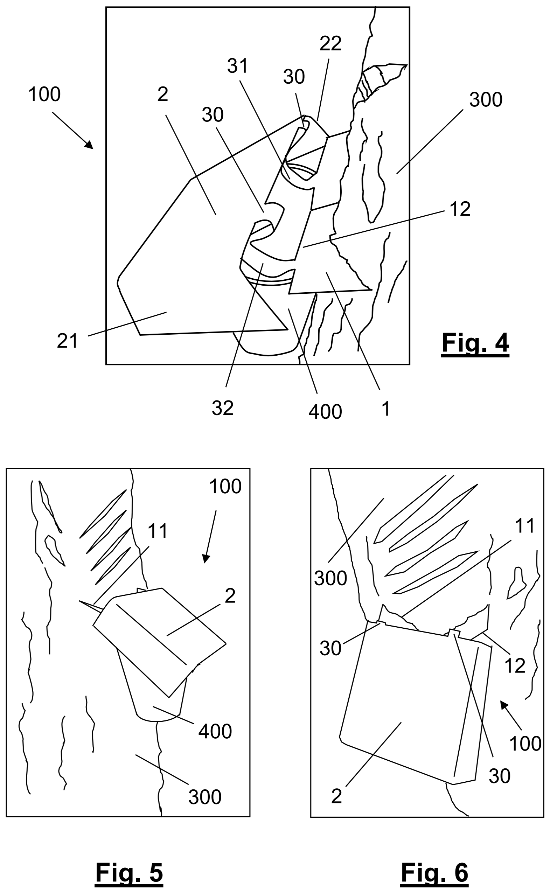

It should be noted that the intermediate joining portion 3 (and therefore the two joining strips 31 and 32) has a greater flexibility than the covering portion 2 due to its mechanical slenderness, the intermediate joining portion 3 being able to be folded by manually applying some force against the covering portion 2 in the direction of the embedding and guiding portion 1 when the latter is embedded in the trunk 300. The foldability of the joining strips 31 and 32 is exemplified in Figure 4, showing how they can be folded in multiple directions. Thus, when folding the joining strips 31 and 32, the separation distance between the covering portion 2 and the embedding and guiding portion 1 is variable depending on the application of said force (the magnitude of the force and the directions in which it is applied).

When comparing Figure 4 to Figure 1, it is deduced that the instrument 100 can move from a non-operative position, in which the projections on a horizontal plane of the outlet edge 12 of the embedding and guiding portion 1 and of the covering portion 2 are separated by a certain distance, to an operative covering position (as in Figure 4), wherein the projections on a horizontal plane of the outlet edge 12 of the embedding and guiding portion 1 and the covering portion 2 are in contact or overlapping, the covering portion 2 being located in the operative covering position above the outlet edge 12, covering, as a kind of visor, the outlet edge 12 and part of the space adjacent thereto extending in the direction opposite to the end edge 11. The same happens when the instrument 100 is that of Fig. 7.

In Figure 3, the resin collector has proceeded to pick up the instrument 100 of Figure 1 or of Figure 7, and has slightly folded in half the embedding and guiding portion 1, bringing the arms that form the V, or the circular arc, closer together to form a kind of guide channel, similar to that of the parts known as plates or clamps 900. The instrument 100 is then picked up and the end edge 11 of the embedding and guiding portion 1 is embedded just below the section of trunk 300 where the tapping has been made and above the collection container 400, so that the embedding and guiding portion 1 is embedded in the trunk 300 and the channel created by the bend, slightly inclined with the outlet edge 12 being lower than the end edge 11, guides the resin from the end edge 11 to the outlet edge 12, and from there, it falls inside the collection container 400.

Now, in order to keep the collected resin and the resin to be collected for a certain period of time free of impurities and rainwater, the resin collector has only to take the covering portion 2 from the side furthest from the tree trunk 300 with their hands and push it upwards and in the direction of the tree trunk 300 (the same direction as toward the embedding and guiding portion 1), to force the intermediate joining portion 3 to fold so that the covering portion 2 can be positioned above the mouth of the collection container 400, as if it were a protective visor.

At the same time, this operative protective position does not prevent the resin from continuing to fall from the outlet edge 12 into the collection container 400, as the space between the two joining strips 31 and 32 remains free.

In the instrument 100 in the non-operative position shown in Figure 1, the maximum separation distance between the projection on a horizontal plane of the vertex of the V of the outlet edge 12 of the embedding and guiding portion 1 and the projection on a horizontal plane of the covering portion 2 is comprised between 6 cm and 10 cm, equal to 8 cm in Figure 1. In the instrument 100 in the non-operative position shown in Figure 7, the maximum separation distance between the projection on a horizontal plane of the midpoint of the circular arc of the outlet edge 12 of the embedding and guiding portion 1 and the projection on a horizontal plane of the covering portion 2 is comprised between 10 cm and 14 cm, being of about 12 cm in Figure 7.

Another detail to note is that, as explained and shown in Figures 3 to 6, in the operative protective position, the covering portion 2 is positioned over the open mouth of the collection container 400, in this case a bucket. For this purpose, the surface area of the covering portion 2 is equal to or larger than the surface area that delimits the contour of the open mouth of the collection container 400. In the case of instrument 100, the covering portion 2 in Figure 1 is a rectangular surface portion measuring 27 cm x 17 cm, in the case of instrument 100 of Figure 7, the covering portion 2 is a rectangular surface portion with two rounded corners, measuring 27 cm x 17.2 cm. It is advantageous that the covering portion 2 can also be folded downwards at the end margins of the sides that are parallel to the joining strips 31 and 32, for a greater lateral protection of the resin contained inside the collection container 400.

## Claims

1. An instrument (100) which can be embedded in a tree trunk (300) for extracting, protecting and preserving fatty substances thereof such as pine resin, comprising an embedding and guiding portion (1) consisting of a V-shaped or a circular arc-shaped sheet or strip, capable, when folded, of being embedded at an end edge (11) into a tree trunk to reach the fatty substance and guide it out of the tree trunk to an outlet edge (12) of the portion from which the fatty substance can be poured into a collection container (400) which is located below the outlet edge (12), **characterised in that** the instrument (100) further comprises a covering portion (2), essentially flat and forming a covering surface, and an intermediate joining portion (3) joining the outlet edge (12) of the embedding and guiding portion (1) to the covering portion (2), wherein the three portions are made in a single piece and wherein the intermediate joining portion (3) has a greater flexibility than the rest of the piece, the intermediate joining portion (3) being able to fold when a certain force is manually applied against the covering portion (2) in the direction of the embedding and guiding portion (1) when the latter is embedded, the separation distance between the covering portion (2) and the embedding and guiding portion (1) being variable depending on the application of said force, and **in that** the instrument (100) can move from a non-operative position, in which the projections on a horizontal plane of the outlet edge (12) of the embedding and guiding portion (1) and the covering portion (2) are separated by a distance, to an operative covering position, in which the projections on a horizontal plane of the outlet edge (12) of the embedding and guiding portion (1) and the covering portion (2) are in contact or overlapped, the covering portion (2) being located in the operative covering position above the outlet edge (12) of the embedding and guiding portion (1), covering, as a king of visor, the outlet edge (12) and part of the space adjacent thereto extending in the direction opposite to the end edge (11).

2. The instrument (100) according to claim 1, **characterised in that** the embedding portion (1), the covering portion (2) and the intermediate portion (3) are made in a single piece made of metal sheet or foil.

3. The instrument (100) according to claim 2, wherein the part consisting of the three portions is made of galvanised iron.

4. The instrument (100) according to claim 2 or 3, **characterised in that** the metal sheet or foil has a thickness comprised between 0.2 cm and 0.4 cm, preferably 0.3 cm.

5. The instrument (100) according to any one of the preceding claims, **characterised in that** the intermediate portion (3) comprises at least two joining strips (31, 32) spaced apart, each having a width of less than the width of the V-shaped or circular arc-shaped sheet or strip of the embedding and guiding portion (1), wherein each of the at least two joining strips (31, 32) extends from a corresponding arm of the V-shaped or circular arc-shaped sheet or strip, on one side of the vertex of the V or of the midpoint of the circular arc, to the covering portion (2).

6. The instrument (100) according to claim 5, **characterised in that** each joining strip (31, 32) has a width comprised between 1 and 2 cm, and the width of the V-shaped or circular arc-shaped sheet or strip of the embedding and guiding portion (1) is between 3.5 and 5 cm.

7. The instrument (100) according to any one of claims 5 to 6, **characterised in that** the separation distance between the joining areas (30) of each of the two joining strips (31, 32) to the covering portion (2) is comprised between 8 and 11 cm, and the length of each joining strip (31, 32) is comprised between 8.5 and 13.5 cm.

8. The instrument (100) according to any one of claims 5 to 7, **characterised in that** in the non-operative position, the maximum separation distance between the projection on a horizontal plane of the vertex of the V or the midpoint of the circular arc of the outlet edge (12) of the embedding and guiding portion (1) and the projection on a horizontal plane of the covering portion (2) is between 6 and 10 cm.

9. The instrument (100) according to any one of the preceding claims, **characterised in that** the covering portion (2) determines a covering surface having a round, elliptical or polygonal shape.

10. The instrument (100) according to any one of the preceding claims, **characterised in that** the covering portion (2) has an area comprised between 200 and 800 cm².

11. An assembly for extracting, protecting, preserving and collecting fatty substances from a tree trunk (300) of a tree such as pine resin, **characterised in that** it comprises an instrument (100) according to any one of the preceding claims, and a collection container (400) provided with an open mouth, suitable for collecting and containing a certain volume of the fatty substance which is guided by the embedding and guiding portion (1) from its end edge (11) to go beyond its outlet edge (12), wherein the surface area of the covering portion (2) is equal to or larger than the surface area delimiting the contour of the open mouth of the collection container (400).
